# EUROPÄISCHE PATENTSCHRIFT

(11) **EP 3 665 641 B1**
(45) Veröffentlichungstag und Bekanntmachung des Hinweises auf die Patenterteilung: **02.09.2026**
(21) Anmeldenummer: 18746673.5
(22) Anmeldetag: 25.07.2018
(51) Int. Cl.: G06Q 50/06

(54) **MOBILES SCHALTEN VON FERNSTEUERBAREN SCHALTERN**
MOBILE SWITCHING OF REMOTELY CONTROLLABLE SWITCHES
COMMUTATION MOBILE DE COMMUTATEURS POUVANT ÊTRE COMMANDÉS À DISTANCE

(30) Priorität: 07.08.2017 DE 102017117913
(43) Veröffentlichungstag der Anmeldung: 17.06.2020
(73) Patentinhaber: Westnetz GmbH, 44139 Dortmund (DE)
(72) Erfinder: KUGEL, Torsten, 45259 Essen (DE)
(74) Vertreter: Cohausz & Florack
(86) Internationale Anmeldenummer: PCT/EP2018/070213
(87) Internationale Veröffentlichungsnummer: WO 2019/029999

(56) Entgegenhaltungen:
- EP-A1- 3 091 630
- CN-A- 106 410 622
- CN-B- 101 540 095
- DE-C2- 19 750 200
- KR-A- 20120 110 768
- KR-A- 20130 128 063
- WIKIPEDIA: "Schaltanlage", INTERNET ARTICLE, 11 February 2017 (2017-02-11), XP055508719, Retrieved from the Internet <URL:https://de.wikipedia.org/w/index.php?title=Schaltanlage&oldid=162534280> [retrieved on 20180921]
- WIKIPEDIA: "Leistungsschalter", INTERNET ARTICLE, 29 July 2017 (2017-07-29), XP055508722, Retrieved from the Internet <URL:https://de.wikipedia.org/w/index.php?title=Leistungsschalter&oldid=167695794> [retrieved on 20180921]
- WIKIPEDIA: "Switchgear", INTERNET ARTICLE, 6 July 2017 (2017-07-06), XP055508725, Retrieved from the Internet <URL:https://en.wikipedia.org/w/index.php?title=Switchgear&oldid=789293043> [retrieved on 20180921]
- WIKIPEDIA: "Smart grid", INTERNET ARTICLE, 4 August 2017 (2017-08-04), XP055508729, Retrieved from the Internet <URL:https://en.wikipedia.org/w/index.php?title=Smart_grid&oldid=793942869> [retrieved on 20180921]
- ARMANDO W. COLOMBO ET AL: "Industrial Cloud-Based Cyber-Physical Systems: The IMC-AESOP Approach", 8 May 2014, SPRINGER, ISBN: 978-3-319-05623-4, pages: Preface,ToC,Ch01 - Ch06,Ch11, XP055480251

## Beschreibung

### Gebiet der Erfindung

Die Erfindung betrifft eine Vorrichtung und ein Verfahren zum Schalten eines fernsteuerbaren Schalters, z. B. in Mittelspannungs- und Hochspannungsnetzen.

### Hintergrund der Erfindung

Ein bekanntes Problem, z. B. in Mittel- und Hochspannungsnetz ist, dass zur Freischaltung von Netzteilen und/oder technischen Betriebsmittel in Mittel- und Hochspannungsnetzen das Schalten von Schaltern des Netzes zwischen einem im Feld ansässigen Monteur und einer Netzleitstelle, die zur Überwachung und Steuerung des Netzes zuständig ist, synchron verarbeitet wird. Das heißt, dass bei der Freischaltung von Netzteilen und/oder technischen Betriebsmittel und/oder Teilen von Anlagen freigeschaltet werden, indem eine telefonische Kommunikation zwischen dem Monteur und einem Mitarbeiter der Netzleitstelle stattfindet. Nach der Freischaltung können beispielsweise Instandhaltungsarbeiten oder dergleichen durchgeführt werden.

Einzelne Schaltschritte zum Freischalten von Netzteilen und/oder technischen Betriebsmitteln des Netzes werden nach einem standardisierten Schema zwischen dem Monteur und einem Mitarbeiter der Netzleitstelle durchgeführt. Um beispielsweise bei Instandhaltungsarbeiten von technischen Betriebsmitteln im Prozessnetz ein Schalten eines fernsteuerbaren Schalters durchzuführen, muss eine derartige synchrone Kommunikation zwischen dem Monteur und dem Mitarbeiter der Netzleitstelle stattfinden. Beispielsweise informiert der Monteur den Mitarbeiter in der Netzleitstelle, dass zur Freischaltung des Netzteils und/oder des technischen Betriebsmittels nun ein Schalten des fernsteuerbaren Schalters erforderlich ist. Daraufhin gibt der Mitarbeiter in einem Netzleitsystem einen Steuerbefehl zum Schalten des fernsteuerbaren Schalters ein, wobei vorher eine Überprüfung der Erforderlichkeit des Schaltens und eine Überwachung etwaig erforderlicher vorheriger Schaltschritte durch die Netzleitstelle stattgefunden haben. Die Fernschaltung des fernsteuerbaren Schalters übernimmt die Netzleitstelle.

Aus dem Stand der Technik sind zur Entlastung der Netzleitstelle bzw. deren Mitarbeiter Lösungen bekannt, die ein automatisches Nachführen von durchgeführten Schaltschritten ermöglichen. Einzelne Betriebsmittel des Netzes sind mit einem Identifikationscode, z. B. einem Barcode oder QR-Code versehen, wobei der Monteur nach dem Schalten den Identifikationscode mit einem elektronischen Gerät einließt (z. B. einscannt), den neuen Status des Betriebsmittels (z. B. Schalter aus) einträgt, und diese Information beispielsweise von einer Applikation des elektronischen Gerätes an die Netzleitstelle überträgt, so dass der aktuelle Status des Netzes ohne Kapazitätsbindung des Personal in der Netzleitstelle nachgeführt ist. Dies erleichtert beispielsweise die Überwachung etwaig erforderlicher vorheriger Schaltschritte durch einen Mitarbeiter der Netzleitstelle.

Fernsteuerbare Schalter von Netzen liegen in einer sicherheitskritischen Infrastruktur dieser Netze. Um eine Manipulation insbesondere durch unberechtigte Dritte auszuschließen, wurde bisher auf eine Fernschaltung von fernsteuerbaren Schalter von außerhalb der Netzleitstelle verzichtet. Insbesondere macht eine Fernschaltung einen Zugriff auf das Netzleitsystem über ein öffentliches Netz erforderlich, (z. B. mittels einer sogenannten App eines Smartphones, wobei die App über ein öffentliches Netz (z. B. Internet) auf die sicherheitskritische Infrastruktur des Netzleitsystems zur Fernschaltung zugreifen muss), notwendig.

Es wäre wünschenswert fernsteuerbare Schalter unter Berücksichtigung von sicherheitskritschen Aspekten nicht nur vom Ort der Netzleitstelle aus schalten zu können.

Die Druckschriften DE19750200C2, CN 106410622A, CN101540095B, KR20120110768A und KR20130128063A offenbaren eine Schnittstelle zwischen einem mobilen Gerät und Schalter, wobei die Schalter gesteuert und/oder überwacht werden.

### Allgemeine Beschreibung einiger beispielhafter Ausführungsformen der Erfindung

Vor dem Hintergrund des dargestellten Standes der Technik ist es somit Aufgabe, die beschriebenen Probleme zumindest teilweise zu verringern oder zu vermeiden, das heißt insbesondere eine Möglichkeit bereitzustellen, dass fernsteuerbare Schalter eines Netzes über die Möglichkeit des Schaltens von der Netzleitstelle aus hinausgehend schaltbar sind, unter Berücksichtigung sicherheitskritischer Aspekte des Netzes.

Die Erfindung wird durch die beigefügten Ansprüche definiert. Diese Aufgabe wird gegenständlich durch ein Verfahren nach Anspruch 1 gelöst, durchgeführt von einer oder mehreren Vorrichtungen (110) in einem Netz in Form eines Mittelspannungs- oder Hochspannungsnetzes, umfassend:
- Erfassen eines Schaltantrags, wobei der Schaltantrag ein freizuschaltendes Netzteil und/oder Betriebsmittel des Netzes zur Durchführung einer Maßnahme umfasst;
- Bestimmen einer Schaltreihenfolge für Bauteile (140a, 140b, 140c) eines von einer Netzleitstelle koordinierten Netzes (140) zumindest teilweise basierend auf dem erfassten Schaltantrag, um Netzteile und/oder Betriebsmittel des Netzes (140) gemäß dem erfassten Schaltantrag freizuschalten, wobei die Schaltreihenfolge einen oder mehrere Schaltschritte umfasst, die chronologisch durchzuführen sind und wobei die Schaltreihenfolge von einem Netzleitsystem (110) berechnet wird;
- Erfassen einer Schaltanfrage zum Schalten eines fernsteuerbaren Schalters (140b) des Netzes, wobei die Schaltanfrage von einem elektronischen Gerät (130) eines Monteurs übermittelt wird;
- Bestimmen einer Freigabeinformation zumindest teilweise basierend auf einem Status des Netzes (140) und der bestimmten Schaltreihenfolge, wobei die Freigabeinformation indikativ für ein Ermöglichen des Schaltens von dem fernsteuerbaren Schalter (140b) ist, wenn der Status des Netzes (140) die bestimmte Schaltreihenfolge abbildet, und wobei die Freigabeinformation andernfalls indikativ für ein Sperren des Schaltens von dem fernsteuerbaren Schalter (140b) ist, wobei die Freigabeinformation ferner basierend auf einem Parameter einer Schaltantragsinformation indikativ für einen von einem Nutzer (160, 170) gestellten Schaltantrag, einem Parameter eines Datums der Schaltanfrage, und/oder einem Parameter einer Person der Schaltanfrage (160) bestimmt wird, und wobei basierend auf der erfassten Schaltanfrage überprüft wird, ob die bestimmte Schaltreihenfolge ausgeführt wurden, und wobei der Status des Netzes (140) eine Information umfasst, ob vorherige Schaltschritte der bestimmten Schaltreihenfolge ausgeführt wurden, wobei die bestimmte Freigabeinformation eine Beschränkungsinformation in Form eines Sessiontokens umfasst, wobei die Beschränkungsinformation indikativ für eine zeitliche Beschränkung der Freigabeinformation ist, wobei die Freigabeinformation nach Ablauf der zeitlichen Beschränkung indikativ für ein Sperren des Schaltens von dem fernsteuerbaren Schalter ist, wobei eine maximale Anzahl an Schaltvorgängen des fernsteuerbaren Schalters, die in einem vordefinierten zeitlichen Rahmen durchgeführt werden können, als Schaltvorgangsinformation von der Freigabeinformation umfasst ist, wobei bei Überschreiten der maximalen Anzahl an Schaltvorgängen die Freigabeinformation indikativ ist für ein Sperren des Schaltens von dem fernsteuerbaren Schalter, wobei der Sessiontoken generiert wird, der für den Fall, dass gemäß der bestimmten Schaltreihenfolge ein mehrmaliges Schalten des fernsteuerbaren Schalters vorgesehen ist, diese Anzahl an Schaltvorgängen für den fernsteuerbaren Schalters zugelassen ist, wobei der vordefinierte zeitliche Rahmen identisch ist mit dem der zeitlichen Beschränkung gemäß der Freigabeinformation, wobei die Freigabeinformation auf das elektronische Gerät (130) des Monteur übermittelt wird; und
- Schalten des fernsteuerbaren Schalters (140b) basierend auf der bestimmten Freigabeinformation, wobei das Auslösen des Schaltens von dem fernsteuerbaren Schalter (140b) mittels einer entsprechenden Eingabe in das elektronische Gerät (130) erfolgt;
wobei der fernsteuerbare Schalter (140b) Mittel zum Schalten des Schalters über eine Datenanbindung mittels des Netzleitsystems aufweist und eine Schaltbetätigungsinformation von dem elektronischen Gerät an das Netzleitsystem übermittelt wird.

Ein Schaltantrag umfasst ein freizuschaltendes Netzteil und/oder Betriebsmittel des Netzes zur Durchführung einer Maßnahme (z. B. Instandhaltungsarbeiten). Zur Freischaltung wird eine Schaltreihenfolge (z. B. eine Schrittliste umfassend einen oder mehrere Schaltschritt) bestimmt. Ein Schaltauftrag entspricht einem einzelnen Schaltschritt der bestimmten Schaltreihenfolge.

Um fernsteuerbare Schalter eines Netzes über die Möglichkeit des Schaltens von der Netzleitstelle aus hinausgehend zu schalten, wird gegenständlich eine Schaltanfrage erfasst. Diese Schaltanfrage kann beispielsweise von einem Monteur stammen, wobei die Schaltanfrage z. B. mittels einer sogenannten App, die von einem elektronischen Gerät (z. B. ein Smartphone, Tablet, oder dergleichen um einige nicht-limitierende Beispiele zu nennen) ausgeführt wird, übermittelt wird. Da es sich bei dem Schalten eines fernsteuerbaren Schalters eines Netzes, wie etwa einem Mittelspannungs- und/oder Hochspannungsnetz, um ein höchst sicherheitskritisches Verfahren handelt, muss sichergestellt werden muss, dass kein unberechtigtes Schalten des fernsteuerbaren Schalters durchgeführt werden kann, z. B. durch einen unberechtigten Dritten. Dies könnte beispielsweise die Versorgungssicherheit der über das Netz versorgten Verbraucher gefährden.

Die Schaltreihenfolge wird von dem Netzleitsystem bestimmt (z. B. berechnet). Das Netzleitsystem wird beispielsweise von einem Server ausgeführt. Die Schaltreihenfolge ist beispielsweise eine notwendige Schaltreihenfolge, die im Netz an einem oder mehreren Bauteilen durchgeführt werden muss, um die Netzteile und/oder Betriebsmittel des Netzes gemäß dem beispielsweise von einem Monteur gestellten und entsprechend erfassten Schaltauftrag freizuschalten. Dabei können beispielsweise auch andere terminierte Schaltaufträge diese bestimmte Schaltreihenfolge beeinflussen. Die Berechnung und das anschließende Prüfen von einem Mitarbeiter der Netzleitstelle können beispielsweise ferner sicherstellen, dass z. B. die Sicherheit eines oder mehrerer an der Bearbeitung des Schaltauftrags (bzw. mehrerer Schaltaufträge) beteiligter Monteure gewährleistet ist.

Entsprechend erfolgt ein Bestimmen der Freigabeinformation. Die Freigabeinformation ist indikativ für ein Ermöglichen des Schaltens von dem fernsteuerbaren Schalter, wenn der Status des Netzes dem der bestimmten Schaltreihenfolge entspricht, und andernfalls ist die Freigabeinformation indikativ für ein Sperren des Schaltens von dem fernsteuerbaren Schalter. Basierend auf der erfassten Schaltanfrage wird beispielsweise überprüft, ob die bestimmte Schaltreihenfolge, z. B. Vorbedingungen bzw. vorherige Schritte der Schaltreihenfolge ausgeführt wurde. Der Status des Netzes umfasst bzw. bildet beispielsweise die Vorbedingungen ab. Der Status des Netzes umfasst beispielsweise eine Information, ob die vorherigen Schritte der bestimmten Schaltreihenfolge ausgeführt wurden. Durchgeführte Schaltschritte werden beispielsweise von der Netzleitstelle in dem Netzleitsystem zumindest nachgeführt und/oder der aktuelle Schaltzustand eines Bauteils des Netzes wird von dem Netzleitsystem überwacht und ist unmittelbar als Status des Netzes nachvollziehbar. Nur wenn folglich der Status des Netzes demjenigen entspricht, der vorliegen muss, damit ein Schalten des fernsteuerbaren Schalters durchgeführt werden kann bzw. darf, ist die Freigabeinformation indikativ für ein Ermöglichen des Schaltens von dem fernsteuerbaren Schalter.

Basierend auf der bestimmten Freigabeinformation kann das Schalten des fernsteuerbaren Schalters erfolgen.

Eine beispielhafte Ausgestaltung des Gegenstands sieht vor, dass die bestimmte Schaltreihenfolge einen oder mehrere Schaltschritte umfasst, die chronologisch durchzuführen sind, wobei das Schalten des fernsteuerbaren Schalters zumindest einen Schritt der Schaltreihenfolge darstellt.

Ein Schaltschritt ist im Folgenden auch mit "Schaltauftrag" bezeichnet. Die bestimmte Schaltreihenfolge umfasst beispielsweise eine Schrittliste mit einzelnen Schaltschritten.

Zur Freischaltung von Netzteilen und/oder Betriebsmitteln des Netzes müssen die Schaltschritte gemäß der bestimmten Schaltreihenfolge durchgeführt werden. Erst nach dem Ausführen des letzten Schaltschritts gemäß der bestimmten Schaltreihenfolge ist die Freischaltung des vorgesehenen Netzteils und/oder Betriebsmittels des Netzes erfolgt. Beispielsweise können Instandhaltungs-, Wartungs- und/oder Reparaturarbeiten an dem Netzteil und/oder Betriebsmittel des Netzes durchgeführt werden. Sind diese abgeschlossen, erfolgt eine sogenannte Rückschaltung, wobei nach erfolgter Rückschaltung der zuvor freigeschaltete Netzteil und/oder das Betriebsmittel wieder am Betrieb des Netzes teilnehmen. Hierzu erfolgt das Erfassen eines weiteren Schaltauftrags, ein erneutes bestimmen einer Schaltreihenfolge, ein Erfassen einer weiteren Schaltanfrage, ein Bestimmen einer weiteren Freigabeinformation, und ein Schalten des fernsteuerbaren Schalters, wobei das gegenständliche Verfahren nach allen Aspekten erneut Anwendung findet.

Eine weitere beispielhafte Ausgestaltung sieht vor, dass der Status des Netzes nach jedem durchgeführten Schaltschritt der einen oder mehreren Schaltschritte der bestimmten Schaltreihenfolge erfasst wird, und die Freigabeinformation indikativ für ein Ermöglichen des Schaltens ist, falls sämtliche der einen oder mehreren Schaltschritte in der chronologischen Reihenfolge vor dem Schritt des Schaltens von dem fernsteuerbaren Schalter durchgeführt wurden.

In einer beispielhaften Ausgestaltung des Gegenstands umfasst ein jeweiliger Schaltschritt der einen oder mehreren Schaltschritte der bestimmten Schaltreihenfolge eine Ortsinformation, eine Zeitinformation, eine Datumsinformation, eine Personeninformation, oder eine Kombination hiervon.

Die Ortsinformation ist beispielsweise indikativ für einen vorbestimmten Position oder einen vorbestimmten Umkreis, von dem der jeweilige Schaltschritt der bestimmten Schaltreihenfolge durchführbar ist. Beispielsweise kann gemäß der Ortsinformation festgelegt sein, dass nur bei Aufenthalt an dem vorbestimmten Ort oder dem vorbestimmten Umkreis ein (Fern-) Schalten des fernsteuerbaren Schalters möglich.

Die Zeitinformation ist beispielsweise indikativ für ein vorbestimmtes Zeitintervall, z. B. eines Tages oder sich erstreckend über mehrere Tage, in dem der jeweilige Schaltschritt der bestimmten Schaltreihenfolge durchführbar ist.

Die Datumsinformation ist beispielsweise indikativ für ein bestimmtes Datum oder für ein bestimmtes Datumsintervall, an dem der jeweilige Schaltschritt der bestimmten Schaltreihenfolge durchführbar ist. Insbesondere kann die Zeitinformation mit einer Datumsinformation assoziiert sein, oder vice versa. Derart kann insbesondere ein Intervall festgelegt werden, in dem der jeweilige Schaltschritt der bestimmten Schaltreihenfolge durchführbar ist.

Die Personeninformation ist beispielsweise indikativ für eine oder mehrere Personen, die beispielsweise anhand einer Identifikationsinformation eindeutig bestimmt werden können. Den jeweiligen Schaltschritt der bestimmten Schaltreihenfolge, der mit der Personeninformation beispielsweise assoziiert ist, können beispielsweise (nur) die gemäß der Personeninformation vorbestimmten einen oder mehreren Personen durchführen. Derart kann sichergestellt werden, dass nur berechtigte oder vorbestimmte Personen einen jeweiligen Schaltschritt, insbesondere das Schalten des fernsteuerbaren Schalters durchführen bzw. ausführen können.

Umfasst ein jeweiliger Schaltschritt mehr als eine der verschiedenen Informationen (Ortsinformation, Zeitinformation, Datumsinformation, Personeninformation, oder eine Kombination hiervon), können diese beispielsweise miteinander verknüpft sein. Beispielsweise für den Fall, dass ein jeweiliger Schaltschritt der bestimmten Schaltreihenfolge eine Ortsinformation und eine Personeninformation umfasst, kann der jeweilige Schaltschritt (z. B. das Schalten des fernsteuerbaren Schalters) der bestimmten Schaltreihenfolge beispielsweise nur durchgeführt werden, wenn eine vorbestimmte Person gemäß der Personeninformation sich an einem gemäß der Ortsinformation vorbestimmten Aufenthaltsort aufhält. Dies kann beispielsweise mittels eines oder mehrerer Sensoren, die beispielsweise von einem elektronischen Gerät (z. B. ein Smartphone, ein Tablet, oder dergleichen), das beispielsweise die Person mitführt, umfasst sind, durchgeführt werden. Beispielsweise kann eine Lokalisierung mittels eines Satellitenbasierten Ortungssystems (z. B. GPS (Global Positioning System), GALILEO, oder dergleichen, um einige nicht-limitierende Beispiele zu nennen) durchgeführt werden.

Eine beispielhafte Ausgestaltung des Gegenstands sieht vor, dass die Freigabeinformation ferner basierend auf einem oder mehreren der folgenden Parameter i) bis iv) bestimmt wird:
i) Schaltantragsinformation indikativ für einen von einem Nutzer gestellten Schaltantrag;
ii) Ort der Schaltanfrage;
iii) Zeit der Schaltanfrage;
iv) Datum der Schaltanfrage; und
v) Person der Schaltanfrage.

Die Schaltanfrage kann beispielsweise eine Schaltantragsinformation umfassen, die indikativ für einen von einem Nutzer (z. B. eine Person; ein Monteur) gestellten Schaltantrag ist. Derart kann beispielsweise bestimmt werden, ob die erfasste Schaltanfrage von der gleichen Person oder von einer Person aus dem gemäß dem gestellten Schaltantrag vorbestimmten Personenkreis stammt oder nicht.

Die erfasste Schaltanfrage kann beispielsweise eine oder mehrere Informationen indikativ für einen Ort der Schaltanfrage, eine Zeit der Schaltanfrage, ein Datum der Schaltanfrage, eine Person der Schaltanfrage, oder eine Kombination hiervon sein. Beispielsweise kann bestimmt werden, ob diese von der erfassten Schaltanfrage umfassten Informationen (Ort der Schaltanfrage, Zeit der Schaltanfrage, Datum der Schaltanfrage, Person der Schaltanfrage, oder eine Kombination hiervon) mit den von einem jeweiligen Schaltschritt der einen oder mehreren Schaltschritte der bestimmten Schaltreihenfolge umfassten Informationen (Ortsinformation, Zeitinformation, Datumsinformation, Personeninformation, oder eine Kombination hiervon) übereinstimmen. Für den Fall, dass eine Übereinstimmung gemäß der von der erfassten Schaltanfrage umfassten Informationen mit den von dem jeweiligen Schaltschritt der einen oder mehreren Schaltschritte der bestimmten Schaltreihenfolge vorliegt, kann entsprechend die Freigabeinformation indikativ für ein Ermöglichen des Schaltens von dem fernsteuerbaren Schalter bestimmt werden. Andernfalls kann die Freigabeinformation beispielsweise indikativ für ein Sperren des Schaltens von dem fernsteuerbaren Schalter sein.

In dem mit den Bauteilen des Netzes verknüpften Netzleitsystem, welches von der Netzleitstelle koordiniert wird, kann beispielsweise hinterlegt sein, dass der fernsteuerbare Schalter geschaltet werden muss. Hierzu ist beispielsweise die bestimmte Schaltreihenfolge in einem Speicher (z. B. eine Datenbank) des Netzleitsystems hinterlegt. Nur für den Fall, dass eine Übereinstimmung zwischen den von der erfassten Schaltanfrage umfassten Informationen und den von dem jeweiligen Schaltschritt der einen oder mehreren Schaltschritte der bestimmten Schaltreihenfolge vorliegt, kann der fernsteuerbare Schalter geschaltet werden. Beispielsweise kann gemäß der von der erfassten Schaltanfrage umfassten Zeit der Schaltanfrage und der von einem Schaltschritt zum Schalten eines fernsteuerbaren Schalters des Netzes überprüft werden, ob die Schaltanfrage zum Schalten des fernsteuerbaren Schalters innerhalb des gemäß der Zeitinformation vorbestimmten Zeitintervalls erfolgt.

In einer beispielhaften Ausgestaltung des Gegenstands umfasst das Erfassen der Schaltanfrage eine Authentifizierung eines Nutzers, und das Erfassen der Schaltanfrage erfolgt, wenn der Nutzer erfolgreich authentifiziert ist.

Eine weitere beispielhafte Ausgestaltung sieht vor, dass der Zustand des Netzes zumindest den Schaltzustand von einem oder mehreren der folgenden Typen von Schaltern repräsentiert:
a. Manueller Schalter;
b. Manueller Schalter mit Datenanbindung für Überwachungsmöglichkeit; und
c. Fernsteuerbarer Schalter.

Manuelle Schalter bieten keine unmittelbare Überwachungsmöglichkeit des Zustands (z. B. eingeschaltet oder ausgeschaltet) des Schalters. Jedoch kann ein Schaltschritt gemäß der bestimmten Schaltreihenfolge das Schalten eines manuellen Schalters erfordern. Dies muss beispielsweise als Zustand des Netzes erfasst werden können, damit die Freigabeinformation bestimmt werden kann. Derartige manuelle Schalter bieten keine unmittelbare Überwachungsmöglichkeit, z. B. durch einen Sensor, der den manuellen Schalter überwacht und über eine Datenanbindung den Zustand des manuellen Schalters an das Netzleitsystem bzw. die Netzleitstelle übermitteln kann. Um den Zustand derartiger manueller Schalter im Netz erfassen zu können, werden diese in der Netzleitstelle nachgeführt. Der entsprechende Schaltstatus wird hierbei jeweils händisch von einem Mitarbeiter der Netzleitstelle erfasst und kann dann als Zustand des Netzes, z. B. in dem Netzleitsystem eingetragen und erfasst werden.

Ferner kann das Netz manuelle Schalter mit einer Überwachungsmöglichkeit, z. B. mittels eines Sensors, der den Schaltzustand des manuellen Schalters erfasst und über eine Datenanbindung an das Netzleitsystem bzw. die Netzleitstelle übermittelt, umfassen. Auch derartige Schalter können von dem Zustand des Netzes umfasst sein bzw. repräsentiert sein.

Fernsteuerbare Schalter verfügen zusätzlich über Mittel, die ein Schalten des Schalters beispielsweise über eine Datenanbindung aus der Ferne, z. B. mittels des Netzleitsystems, ermöglichen.

Eine beispielhafte Ausgestaltung des Gegenstands sieht vor, dass die bestimmte Freigabeinformation vor dem Schalten des Schalters ausgegeben bzw. deren Ausgabe veranlasst wird, und das Schalten des Schalters ferner bei Erfassen einer Schaltbetätigungsinformation indikativ für ein Auslösen des Schaltvorgangs für den fernsteuerbaren Schalter erfolgt.

Ein Nutzer, z. B. ein Monteur erhält durch die Ausgabe beispielsweise die bestimmte Freigabeinformation. Die Freigabeinformation wird beispielsweise auf ein elektronisches Gerät des Monteurs, mit dem der Monteur beispielsweise die Schaltanfrage versendet hat, übermittelt. Das Auslösen des Schaltens des fernsteuerbaren Schalters kann beispielsweise nun erfolgen, wenn der Monteur dies wünscht. Beispielsweise kann der Monteur eine entsprechende Eingabe, z. B. in das elektronische Gerät eingeben. Daraufhin wird beispielsweise eine Schaltbetätigungsinformation von dem elektronischen Gerät an das Netzleitsystem übermittelt. Optional kann beispielsweise ein generierter und entsprechend mit übertragener Sessiontoken überprüft werden. Weitere Details zu einem Sessiontoken sind nachstehend in dieser Spezifikation beschrieben. Auf der Basis des Ergebnisses der Überprüfung kann beispielsweise eine Schnittstelle des Netzleitsystems freigegeben werden und erst dann erfolgt das Schalten des fernsteuerbaren Schalters. Derart kann der Monteur den Zeitpunkt des Schaltens des fernsteuerbaren Schalters explizit bestimmen. Denn bei einem Schalten des fernsteuerbaren Schalters unmittelbar nach einer erfassten Schaltanfrage und dem Bestimmen der Freigabeinformation, könnte es sein, dass das Schalten des fernsteuerbaren Schalters zu einem Zeitpunkt geschieht, zu welchem der Monteur nicht damit rechnet. Das Erfassen einer Schaltbetätigungsinformation schafft entsprechend eine Steuer- und Beeinflussungsmöglichkeit für das Schalten des fernsteuerbaren Schalters, z. B. für den Monteur.

In einer beispielhaften Ausgestaltung des Gegenstands ist von der bestimmten Freigabeinformation eine Beschränkungsinformation umfasst, wobei die Beschränkungsinformation indikativ für eine zeitliche Beschränkung der Freigabeinformation ist, wobei die Freigabeinformation nach Ablauf der zeitlichen Beschränkung indikativ für ein Sperren des Schaltens von dem fernsteuerbaren Schalter ist.

Die Beschränkungsinformation kann beispielsweise ein sogenannter Sessiontoken sein. Die ausgegebene Freigabeinformation kann beispielsweise einen generierten Sessiontoken umfassen. Optional kann basierend auf der bestimmten Freigabeinformation für den Fall, dass die Freigabeinformation indikativ für ein Ermöglichen des Schaltens von dem fernsteuerbaren Schalter ist, beispielsweise ein Sessiontoken generiert werden. Dieser Sessiontoken kann beispielsweise ausgegeben werden bzw. dessen Ausgabe kann veranlasst werden. Der Sessiontoken kann beispielsweise an ein elektronisches Gerät, von dem beispielsweise die erfasste Schaltanfrage stammt, übermittelt werden. Die Generierung bzw. Erstellung des Sessiontokens kann beispielsweise von realen physikalischen Bedingungen innerhalb des Netzes, z. B. repräsentiert durch den Status des Netzes, abhängen.

Beispielsweise ermöglicht ein generierter Sessiontoken einen Zugriff auf ein Netzleitsystem, das das Schalten des fernsteuerbaren Schalters beispielsweise durch ein elektronisches Gerät, von dem die erfasste Schaltanfrage stammt, gestattet. Hierzu kann beispielsweise basierend auf dem generierten Sessiontoken eine Schnittstelle des Netzleitsystems freigegeben werden. Nach dem Schalten des fernsteuerbaren Schalters kann die Schnittstelle beispielsweise (wieder) gesperrt werden. Der Sessiontoken kann dann seine Gültigkeit verlieren. Entsprechend kann ein Zugriff auf das Netzleitsystem über ein öffentliches Netz nur für die Zeit erfolgen, in die erforderliche Schnittstelle freigegeben ist.

Das Schalten des fernsteuerbaren Schalters kann beispielsweise für den Fall erfolgen, dass die Beschränkungsinformation bzw. der Sessiontoken indikativ für eine zeitliche Beschränkung der Freigabeinformation ist, die noch nicht abgelaufen ist. Beispielsweise kann die Beschränkungsinformation nach dem Bestimmen der Freigabeinformation eine Gültigkeit für ein bestimmtes Zeitintervall beginnend mit dem abgeschlossenen Schritt des Bestimmens der Freigabeinformation umfassen. Das Schalten des fernsteuerbaren Schalters kann beispielsweise nur dann erfolgen, wenn beispielsweise die Schaltbetätigungsinformation innerhalb des von der Beschränkungsinformation bestimmten Zeitintervalls erfasst wird. Die Beschränkungsinformation bzw. der Sessiontoken, der von der Freigabeinformation umfasst ist bzw. mit dieser assoziiert ist, kann beispielsweise im Netzleitsystem nachgehalten werden (z. B. in einem Speicher des Netzleitsystems gespeichert sein).

Eine weitere beispielhafte Ausgestaltung sieht vor, dass die Schaltanfrage von einem elektronischen Gerät gesendet wird.

Das elektronische Gerät ist beispielsweise ein mobiles Gerät (z. B. ein Smartphone, Tablet oder dergleichen, um einige nicht-limitierende Beispiele zu nennen). Das elektronische Gerät verfügt beispielsweise über eine Kommunikationsschnittstelle, die eine drahtlose Kommunikation (z. B. nach den WLAN (Wireless Local Area Network) Standard und/oder dem Bluetooth Standard) ermöglicht.

In einer beispielhaften Ausgestaltung des Gegenstands ist zumindest eine der einen oder mehreren Vorrichtungen ein Server konfiguriert zum Ausführen eines Netzleitsystems. Das Netzleitsystem ist beispielsweise von einem oder mehreren Servern repräsentiert, die zusammen das gegenständliche Verfahren nach allen Aspekten ausführen können.

Eine beispielhafte Ausgestaltung des Gegenstands sieht vor, dass ausschließlich für den Zeitpunkt des Schaltens des fernsteuerbaren Schalters eine Schnittstelle des Netzleitsystems für einen Zugriff durch das elektronische Gerät freigeschaltet ist.

Auch die Schnittstelle zum Zugriff auf das Netzleitsystem, z. B. von einer Applikation, die von einem elektronischen Gerät ausgeführt wird, ist beispielsweise nur zeitlich beschränkt/begrenzt freigeschaltet. Dies kann beispielsweise mit einem zuvor beschriebenen Sessiontoken und/oder einer von der Freigabeinformation umfassten Beschränkungsinformation realisiert sein.

In einer beispielhaften Ausgestaltung des Gegenstands ist eine maximale Anzahl an Schaltvorgängen des fernsteuerbaren Schalters, die in einem vordefinierten zeitlichen Rahmen durchgeführt werden können, als Schaltvorgangsinformation von der Freigabeinformation umfasst, und bei Überschreiten der maximalen Anzahl an Schaltvorgängen ist die Freigabeinformation indikativ für ein Sperren des Schaltens von dem fernsteuerbaren Schalter.

Beispielsweise kann die maximale Anzahl an Schaltvorgängen beschränkt werden. Beispielsweise kann ein Sessiontoken generiert werden, der für den Fall, dass gemäß der bestimmten Schaltreihenfolge ein mehrmaliges Schalten des fernsteuerbaren Schalters vorgesehen ist, diese Anzahl an Schaltvorgängen für den fernsteuerbaren Schalters zugelassen ist. Der vordefinierte zeitliche Rahmen kann beispielsweise identisch mit dem der zeitlichen Beschränkung gemäß der Freigabeinformation sein.

Die Schaltvorgangsinformation kann beispielsweise von einem jeweiligen Schaltschritt der einen oder mehreren Schaltschritte von der bestimmten Schaltreihenfolge umfasst sein.

Das gegenständliche Verfahren ermöglicht ein hohes Maß an Sicherheit zum mobilen Schalten eines fernsteuerbaren Schalters in einem Netz, wobei der fernsteuerbare Schalter in einem sicherheitskritschen Bereich des Netzes angeordnet ist. Durch einen Abgleich von einer Anfrage zum Schalten mit einer gemäß der bestimmten Schaltreihenfolge bestimmten Reihenfolge in dem Netzleitsystem kann diese Sicherheit gewährleistet werden. Hierzu können beispielsweise eine oder mehrere der folgenden Parameter abgeglichen werden, so dass die Freigabeinformation nur dann indikativ für ein Ermöglichen des Schaltens des fernsteuerbaren Schalters ist:
i) Schaltantrag liegt vor;
ii) Zeit/Tag/Datum der Anfrage zum Schalten des fernsteuerbaren Schalters stimmt mit von einem jeweiligen Schaltschritt der bestimmten Schaltreihenfolgen umfassten Zeitinformation/Datumsinformation über ein;
iii) Authentifizierte Person der Anfrage zum Schalten des fernsteuerbaren Schalters stimmt mit von einem jeweiligen Schaltschritt der bestimmten Schaltreihenfolgen umfassten Personeninformation überein;
iv) Zustand des Netzes (z. B. Schaltbedingungen) gemäß der bestimmten Schaltreihenfolge (z. B. Muster) stimmt überein;
v) Zugriff auf das Netzleitsystem wird geprüft, Person muss sich authentifizieren, Zugriff auf Schnittstelle zum Schalten des fernsteuerbaren Schalters ist nur möglich, wenn die gemäß dem jeweiligen Schaltschritt der bestimmten Schaltreihenfolge definierten Parameter (z. B. Zeit, Tag, Ort, Person, oder eine Kombination hiervon) vorliegen.

Die Schnittstelle zum Zugriff auf den fernsteuerbaren Schalter des Netzleitsystems wird nur dann freigegeben, wenn beispielsweise eine oder mehrere dieser Bedingungen vorliegen. Derart ist ein Zugriff von einem elektronischen Gerät einer Person (z. B. Monteur) über ein öffentliches Netz (z. B. Internet) auf das Netzleitsystem möglich unter der Berücksichtigung sicherheitskritischer Aspekte des Netzes.

Die gegenständliche Aufgabe wird ferner gelöst durch eine Vorrichtung nach Anspruch 14 umfassend Mittel zur Durchführung und/oder Ausführung des gegenständlichen Verfahrens.

Die gegenständliche Aufgabe wird ferner gelöst durch ein System nach Anspruch 15, umfassend:
zumindest eine Vorrichtung zur Ausführung eines gegenständlichen Verfahrens, und zumindest ein elektronisches Gerät, wobei das elektronische Gerät dazu eingerichtet und/oder ausgebildet ist, eine Schaltanfrage an die zumindest eine Vorrichtung zu senden, eine Freigabeinformation von der zumindest einen Vorrichtung zu empfangen, und/oder eine Schaltbetätigungsinformation an die zumindest eine Vorrichtung zu senden.

Die zuvor in dieser Beschreibung beschriebenen beispielhaften Ausgestaltungen sollen auch in allen Kombinationen miteinander offenbart verstanden werden. Insbesondere sollen beispielhafte Ausgestaltungen in Bezug auf die unterschiedlichen Aspekten offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen sind der folgenden detaillierten Beschreibung einiger beispielhafter Ausführungsformen, insbesondere in Verbindung mit den Figuren, zu entnehmen. Die Figuren sollen jedoch nur dem Zwecke der Verdeutlichung, nicht aber zur Bestimmung des Schutzbereiches dienen. Die Figuren sind nicht maßstabsgetreu und sollen lediglich das allgemeine Konzept beispielhaft widerspiegeln. Insbesondere sollen Merkmale, die in den Figuren enthalten sind, keineswegs als notwendiger Bestandteil erachtet werden.

### Kurze Beschreibung der Figuren

In der Zeichnung zeigt
- Fig. 1: eine beispielhafte Ausgestaltung eines gegenständlichen Systems;
- Fig. 2: ein beispielhaftes Flussdiagramm einer Vorbereitung zur Durchführung einer beispielhaften Ausgestaltung eines gegenständlichen Verfahrens;
- Fig. 3a-d: beispielhafte schematische Flussdiagramme einer Schaltung (Vorbereitung und Hinschaltung) unter Verwendung einer beispielhaften Ausgestaltung eines gegenständlichen Verfahrens; und
- Fig. 4a-b: beispielhafte schematische Flussdiagramme einer Rückschaltung unter Verwendung einer beispielhaften Ausgestaltung eines gegenständlichen Verfahrens.

### Detaillierte Beschreibung einiger beispielhafter Ausführungsformen der Erfindung

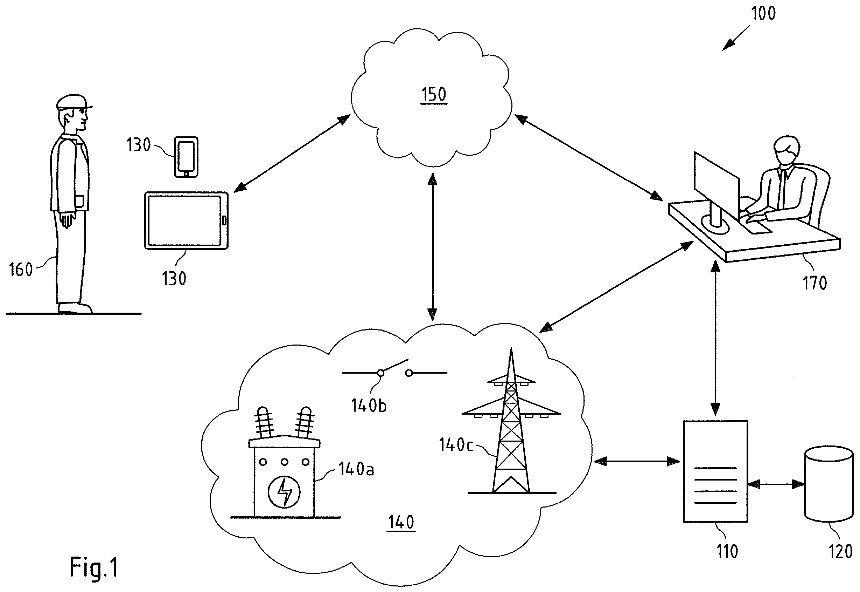

Fig. 1 zeigt eine beispielhafte Ausgestaltung eines gegenständlichen Systems.

Das System 100 umfasst einen Server 110, der beispielsweise konfiguriert ist, ein Netzleitsystem auszuführen und/oder zu steuern. Das System 100 umfasst eine Datenbank 120, die mit dem Server 100 elektrisch verbunden ist. Das System 100 umfasst ein mit dem Server 110 elektrisch verbundenes Netz 140, das beispielsweise als Mittel- oder Hochspannungsnetz ausgebildet ist. Das Netz 140 umfasst ein oder mehrere Netzteile (z. B. Transformator 140a) und/oder Betriebsmittel (z. B. Mittel- oder Hochspannungsleitung 140c), sowie zumindest einen von dem Netzleitsystem fernsteuerbaren Schalter 140b. Das System 100 umfasst ferner ein Kommunikationsnetz 150, z. B. das Internet, über welches beispielsweise von dem System 100 umfasste elektronische Geräte 130 mit dem Server 110 kommunizieren können. Das elektronische Gerät 130 kann beispielsweise als ein Smartphone, oder ein Tablet oder dergleichen ausgebildet sein, wobei in Fig. 1 zwei verschiedene Realisierungen dargestellt sind. Das elektronische Gerät kann von einem Nutzer, z. B. einem Monteur 160 verwendet und eingesetzt werden. Das Netzleitsystem, welches auf dem Server 110 ausgeführt ist, kann beispielsweise von einem Mitarbeiter 170 (z. B. Netzführer) gesteuert und/oder geregelt werden.

Das System 100 ist dazu ausgebildet und/oder eingerichtet, ein gegenständliches Verfahren nach allen Aspekten auszuführen und/oder zu steuern.

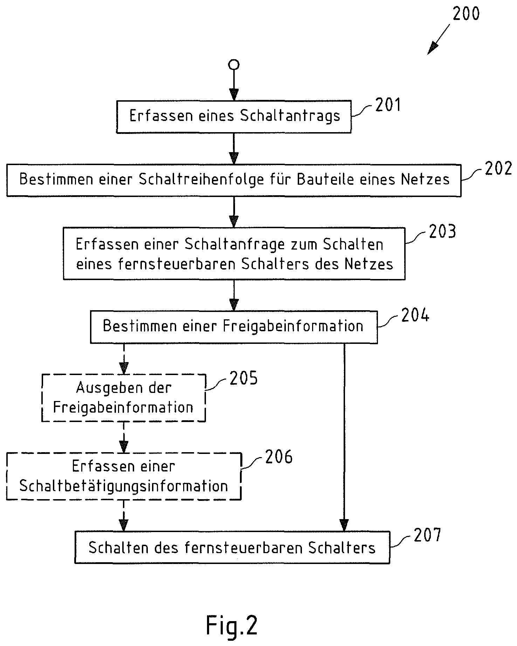

Fig. 2 zeigt ein beispielhaftes schematisches Flussdiagramm einer Vorbereitung zur Durchführung einer beispielhaften Ausgestaltung eines gegenständlichen Verfahrens.

Das Flussdiagramm 200 kann beispielsweise von einer oder mehreren Vorrichtungen durchgeführt und/oder ausgeführt, z. B. von einem Server 110 nach Fig. 1, der beispielsweise konfiguriert ist, ein Netzleitsystem zu repräsentieren.

**In** Schritt 201 erfolgt ein Erfassen eines Schaltantrags.

In Schritt 202 erfolgt ein Bestimmen einer Schaltreihenfolge für Bauteile (z. B. Netzteile und/oder Bauteilte 140a, 140b, 140c nach Fig. 1) eines von einer Netzleitstelle koordinierten Netzes (z. B. Netz 140 nach Fig. 1) zumindest teilweise basierend auf dem erfassten Schaltantrag.

In Schritt 203 erfolgt ein Erfassen einer Schaltanfrage zum Schalten eines fernsteuerbaren Schalters (z. B. fernsteuerbarer Schalter 140b nach Fig. 1) des Netzes.

In Schritt 204 erfolgt ein Bestimmen einer Freigabeinformation zumindest teilweise basierend auf einem Status des Netzes und der bestimmten Schaltreihenfolge, wobei die Freigabeinformation indikativ für ein Ermöglichen des Schaltens von dem fernsteuerbaren Schalter ist, wenn der Status des Netzes dem der bestimmten Schaltreihenfolge entspricht bzw. wenn der Status des Netzes die bestimmte Schaltreihenfolge abbildet, und wobei die Freigabeinformation andernfalls indikativ für ein Sperren des Schaltens von dem fernsteuerbaren Schalter ist.

In dem optionalen Schritt 205 erfolgt ein Ausgeben der bestimmten Freigabeinformation, beispielsweise an ein elektronisches Gerät (z. B. das elektronische Gerät 130 nach Fig. 1).

In dem optionalen Schritt 206 erfolgt ein Erfassen einer Schaltbetätigungsinformation indikativ für ein Auslösen des Schaltvorgangs. Hierzu wird beispielsweise die bestimmte Freigabeinformation vor dem Schalten des fernsteuerbaren Schalters ausgegeben bzw. deren Ausgabe veranlasst, und das Schalten des fernsteuerbaren Schalters (140b) erfolgt ferner bei Erfassen der Schaltbetätigungsinformation.

Werden die optionalen Schritte 205 und 206 nicht ausgeführt, kann alternativ nach dem Ausführen des Schrittes 204 mit dem Schritt 207 fortgeführt werden.

In Schritt 207 erfolgt ein Schalten des fernsteuerbaren Schalters (140b) basierend auf der bestimmten Freigabeinformation.

Das folgende Ausführungsbeispiel soll ferner als offenbart verstanden werden:

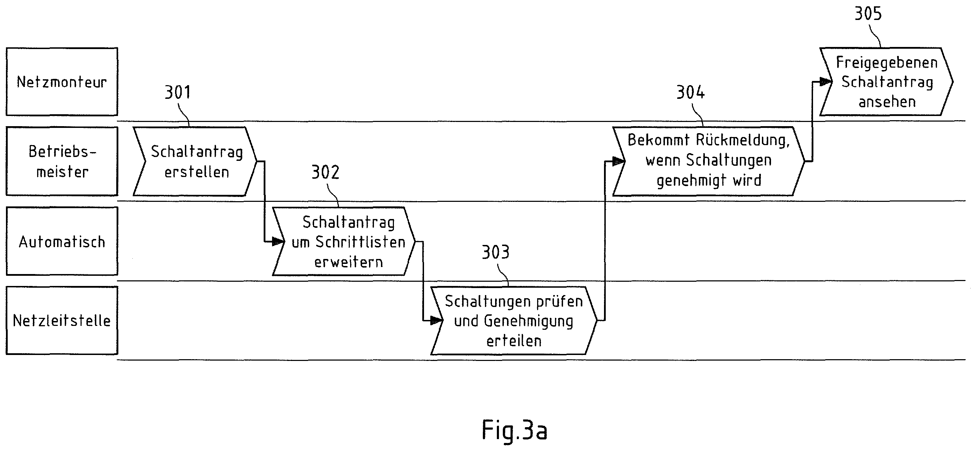

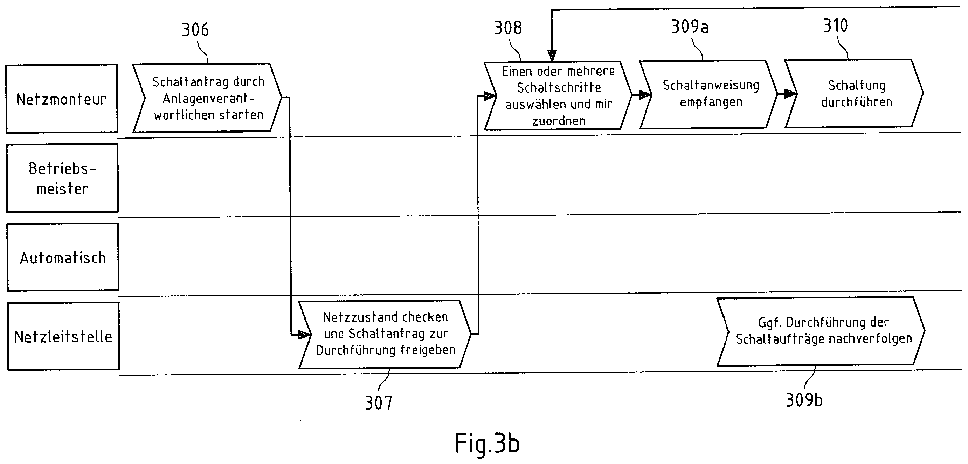

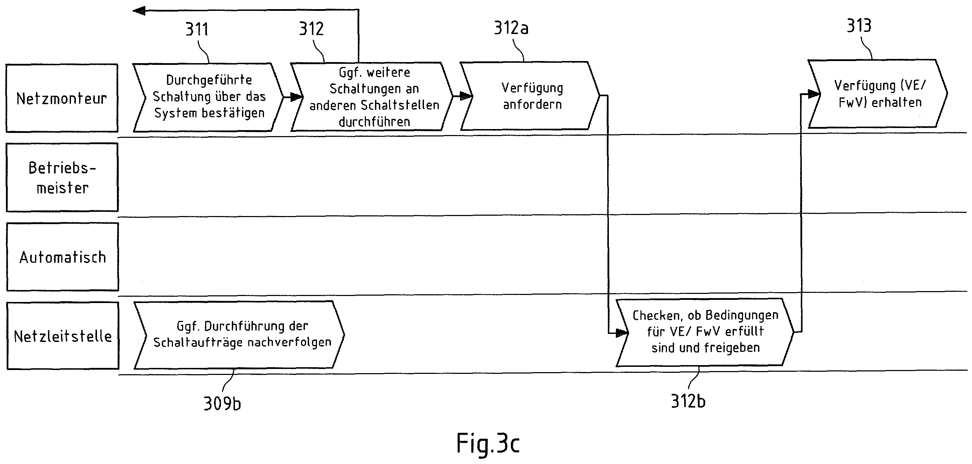

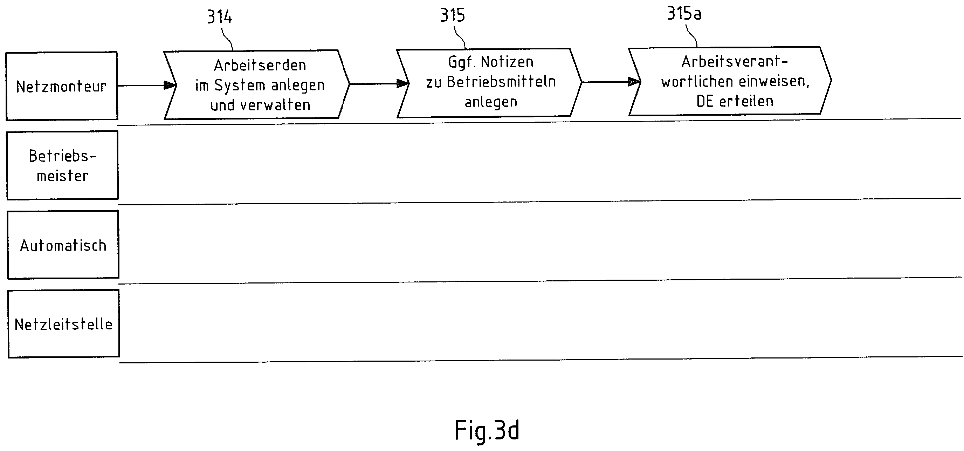

Fig. 3a-d zeigen beispielhafte schematische Flussdiagramme einer Schaltung umfassend eine Vorbereitung der Schaltung (Fig. 3a) und eine Hinschaltung (Fig. 3a-d) unter Verwendung einer beispielhaften Ausgestaltung eines gegenständlichen Verfahrens.

Fig. 3a zeigt mitunter erforderliche Vorbereitungsschritte zur Durchführung einer Schaltung unter Verwendung einer beispielhaften Ausgestaltung eines gegenständlichen Verfahrens.

Die Fig. 3a-d zeigen beispielhafte schematische Flussdiagramme einer Hinschaltung unter Verwendung einer beispielhaften Ausgestaltung eines gegenständlichen Verfahrens.

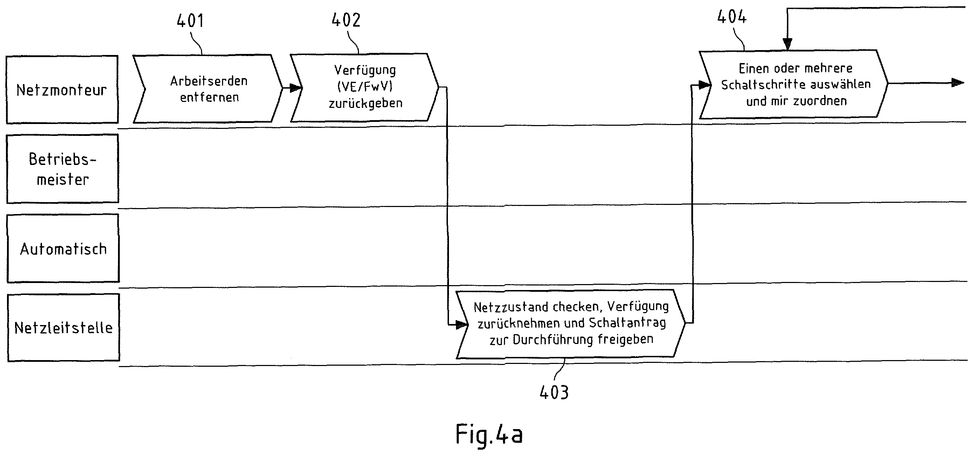

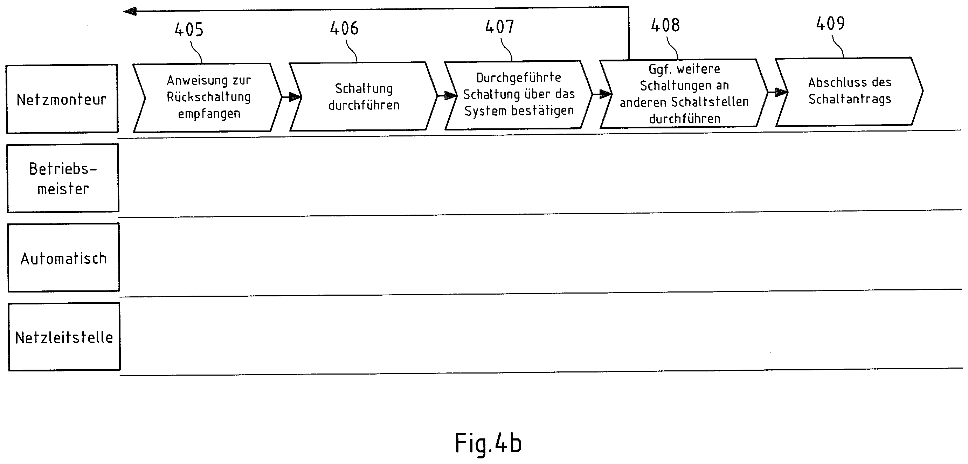

Fig. 4a-b zeigen beispielhafte schematische Flussdiagramme einer Rückschaltung unter Verwendung einer beispielhaften Ausgestaltung eines gegenständlichen Verfahrens.

Die Figuren. 3a-d und 4a-b werden im Folgenden anhand eines beispielhaften Schaltprozesses unter Verwendung eines gegenständlichen Verfahrens nach allen Aspekten verdeutlicht.

Ein Netzmonteur (z. B. Monteur 160 nach Fig. 1) kann in Schritt 305 aus freigegebenen Schaltaufträgen, die einen oder mehrere Schaltschritte eines Schaltantrags zur Freischaltung eines Netzteils (z. B. Transformator 140a nach Fig. 1) und/oder Betriebsmittel (z. B. Mittel- bzw. Hochspannungsleitung 140c nach Fig. 1) diejenigen zur Auswahl gestellt bekommen, für die der Netzmonteur (z. B. Monteur 160 nach Fig. 1) verantwortlich (z. B. als Anlagenverantwortlicher) ist, und/oder für die ein Team, in dem der Netzmonteur (z. B. Monteur 160 nach Fig. 1) Mitglied ist, verantwortlich ist, und/oder für die ein Zeithorizont festgelegt ist, einen Schaltauftrag auswählen (Schritt 306) und ansehen. Die an einer Schaltung beteiligten Monteure (z. B. Monteur 160 nach Fig. 1) und der Anlagenverantwortliche können beispielsweise angezeigt werden.

In einem genehmigten Schaltantrag kann ein Monteur sich selbst einen Schaltschritt zuordnen(Schritt 308 und Schritt 404).

Im Netzleitsystem wird angezeigt, wer sich bereits welchen Schaltschritt zugeordnet hat und ebenfalls, ob ein Kollege (z. B. ein weiterer Monteur (160 nach Fig. 1) vor Ort ist.

Die im Rahmen eines Schaltauftrags relevanten Schaltstellen (z. B. Abgangsfelder in Umspannanlagen, Kuppelstellen, benachbarte Stationen) werden in einem aktuellen Übersichtsschaltbild topologisch korrekt eingefärbt in einer Applikation dargestellt, die beispielsweise ein jeder der Monteure (z. B. Monteure 160 nach Fig. 1) sich anzeigen lassen kann, z. B. mittels eines elektronisches Gerätes (z. B. elektronisches Gerät 130 nach Fig. 1).

Innerhalb des Schaltauftrags kann ein Monteur zur nächsten Schaltstelle navigieren. Sofern die Reihenfolge, welcher Monteur zu welcher Schaltstelle soll durch einen Netzführer (z. B. Netzführer 170 nach Fig. 1) nicht verbindlich festgelegt wurde, kann ein jeder Monteur die Schaltstelle auswählen.

Das Netzleitsystem überprüft vor einer Schaltung beispielsweise mittels GPS, ob der Monteur sich am richtigen Ort befindet und warnt, falls dies nicht der Fall ist, beispielsweise durch Ausgabe einer entsprechenden Information an das elektronische Gerät (z. B. elektronisches Gerät 130 nach Fig. 1).

Das Netzleitsystem übermittelt in Schritt 309a einen konkreten Schaltbefehl, z. B. gemäß Netzführungsrichtlinien, dessen Empfang der Monteur mittels seines elektronischen Gerätes quittieren muss. Alternativ kann eine sichere Validierung beispielsweise mittels eines Fingerabdrucksensors, der von dem elektronischen Gerät umfasst oder mit diesem verbindbar ist, erfolgen, wobei mittels des Fingerabdrucksensors ein Fingerabdruck des Monteurs erfasst wird, und mit einem in einem Speicher, z. B. Datenbank 120 gemäß Fig. 1 von dem Netzleitsystem verglichen wird.

Bei unklarer Situation kann jeder Monteur während eines Schaltschritts den Ablauf stoppen bis er und der Anlagenverantwortliche den Schaltantrag wieder starten.

Der Monteur kann eine genehmigte Schaltung an fernsteuerbaren Feldern umfassend einen oder mehrere fernsteuerbare Schalter mit Hilfe einer Applikation, die von dem elektronischen Gerät ausgeführt wird, betätigen, die dann von dem Netzleitsystem selbstständig ausgeführt wird (Schritt 310 und Schritt 406).

**In** Schritt 311 und Schritt 407 wird nach Durchführung der Schalthandlung diese über das Netzleitsystem bestätigt (sichere Validierung).

Bevor der Monteur eine Schaltanweisung empfängt, die eine VU (Versorgungsunterbrechung) in Netzteilen und/oder Betriebsmitteln bewirkt, bekommt der Monteur einen Warnhinweis angezeigt und um sich dann vergewissern zu können, dass beispielsweise niederspannungsseitig versorgt wird.

Nach jeder Aktion bekommt der Monteur eine Rückmeldung vom Zentralsystem, sofern eine entsprechende Datenverbindung besteht. Das Zentralsystem ist beispielsweise das Netzleitsystem. Alternativ ist das Zentralsystem beispielsweise ein Gateway (z. B. Gatewayrechner).

Das Netzleitsystem ermittelt, ob der Monteur nur so viele und diejenigen Schaltschritte abrufen kann, die auch sicher ausführbar sind, ohne das eine schrittweise Rückmeldung an das Netzleitsystem erfolgt. Dies kann beispielsweise einen Offline-Betrieb ermöglichen.

Sobald der Monteur eine Verfügung über einen Netzteil hat, kann der Monteur Erden (insbesondere bei einer Freigabe zur weiteren Verwendung) und Arbeitserden anlegen (sofern möglich) und entfernen (Schritt 314). Diese Erden werden auch im Netzleitsystem erfasst und protokolliert. Der Monteur und alle an dem Schaltauftrag beteiligten weiteren Personen (z. B. Monteure und Netzführer) erhalten eine Liste aller bestehenden Erden. Dabei wird unterschieden, ob die Erden Bestandteil der VE (Verfügungserlaubnis) sind oder nicht, da diese nicht vor Rückgabe der VE ausgebaut werden dürfen.

Der Monteur kann die im Schaltantrag definierten Verfügungen anfordern, nachdem alle Schaltschritte der Hinschaltung abgeschlossen sind. Nach Freigabe durch die Netzleitstelle (z. B. Netzführer 170 nach Fig. 1) erhält der Monteur Verfügungen (Schritt 312a und Schritt 313).

Vor Beginn der Rückschaltung gibt der Anlagenverantwortliche (z. B. ein ausgewählter Monteur) die Verfügungen der entsprechenden Maßnahme zurück (Schritt 402). Der Monteur erhält eine Abfrage und es erfolgt eine Prüfung, ob Voraussetzungen erfüllt sind (z. B. ob alle Arbeitserden entfernt (Schritt 401) sind oder der zum Zeitpunkt der Verfügungserteilung übergebene Schaltzustand wieder hergestellt ist).

Der Monteur kann in der Applikation des elektronischen Gerätes eine Liste aller Verfügungen (VE, FWV (Freigabe zur weiteren Verwendung), FG (Freischaltgenehmigung), etc.) und zugehöriger Netzteile und/oder Betriebsmittel nach Maßnahmen geordnet abrufen.

Die Freischaltung von Mittelspannungs- und/oder Niederspannungstransformatoren kann beispielsweise über die Netzleitstelle abgewickelt werden.

Zu jedem Zeitpunkt kann der Monteur aus der Applikation über einen einfachen Tastendruck eine Rückfrage, z. B. telefonisch, beispielsweise an den Netzführer stellen, wobei beispielsweise die Schaltung (automatisch) angehalten werden kann.

Zu jedem Netzteil und/oder Betriebsmittel des Netzes kann mittels der Applikation des elektronischen Gerätes eine Notiz seitens eines Monteurs angelegt werden (Schritt 315), die allen Beteiligten bei jeder Aktion anzeigbar ist, beispielsweise ebenfalls über die entsprechenden von den Beteiligten mitgeführten elektronischen Geräte.

Zur Besetzung von Schaltstellen kann in einem genehmigten Schaltantrag das Personal aus den eingeteilten Monteuren für den jeweiligen Schaltschritt festgelegt werden. Als Anlagenverantwortlicher kann aus freigegebenen Schaltaufträgen ein bestimmter Auftrag gestartet werden (Schritt 306).

Zum Anmelden einer Schaltung (Schritt 301) können über ein Schaltantragssystem Schaltanträge eingestellt werden. Schaltmonteure und der Anlagenverantwortliche können eingeplant werden. Es kann eine Rückmeldung vom Netzleitsystem erfolgen, wenn die Schaltung freigegeben oder abgelehnt wurde. Hier werden ausgehend von der durchzuführenden Maßnahme die benötigten Schalthandlungen (bestimmte Schaltreihenfolge; Schrittliste) und Verfügungen angezeigt (Schritt 302).

In einem Schaltantrag werden alle beteiligten Monteure für die Ausführung der Schaltung eingeteilt. In einem genehmigten Schaltantrag kann das Personal aus den eingeteilten Monteuren für den jeweiligen Schritt festgelegt werden.

Wenn Änderungen beim Schaltpersonal notwendig werden (z. B. krankheitsbedingter Ausfall), können diese im bereits genehmigten Schaltantrag vorgenommen werden, ohne dass es einer weiteren Genehmigung bedarf.

Schaltanmeldungen können seitens eines Netzführers (z. B. Netzführer 170 nach Fig. 1) im Netzleitsystem (z. B. Netzsicherheitsrechnung) geprüft, freigegeben bzw. korrigiert werden (Schritt 303). Ferner können in einer bestimmten Schaltreihenfolge ein oder mehrere Haltepunkte definiert werden, bei der die Schaltung angehalten wird und eine Rücksprache erforderlich ist (z. B. besonders schwierige Kupplung von Umspannanlagen).

Sobald ein Anlagenverantwortlicher beispielsweise mittels der Applikation, die auf seinem elektronischen Endgerät ausgeführt wird, einen Schaltantrag startet oder die Rückschaltung mit Rückgabe der Verfügungen beginnen möchte, kann der Netzführer überprüfen, ob sich seit der Anmeldung der Zustand des Netzes (der relevanten Netzbereiche) verändert hat und den Antrag zur Durchführung freigeben (Schritt 307). Bei der Rückschaltung können alle Verfügungen zurückgenommen werden, wenn alle Beteiligten zustimmen. Alle von dieser Maßnahme betroffenen Netzteile und/oder Betriebsmittel werden im Netzleitsystem beispielsweise angezeigt, z. B. markiert. Kann keine Freigabe erteilt werden, kann beispielsweise eine telefonische Klärung erfolgen.

Wenn im Feld Verfügungen gemäß genehmigtem Schaltantrag angefordert werden, kann der Netzführer beispielsweise überprüfen, ob alle Bedingungen erfüllt sind und die Vergabe der Verfügungen dann freigeben (Schritt 312b).

Alle Rückmeldungen werden im Netzleitsystem erfasst und können visualisiert und dokumentiert werden. Die Durchführung des Schaltauftrages kann entsprechend nachverfolgt werden (Schritt 309b und Schritt 403).

Die Reihenfolge der durchzuführenden einen oder mehreren Schritte kann optional durch den Netzführer manuell festgelegt werden bzw. eine bestimmte Schaltreihenfolge kann durch den Netzführer manuell verändert werden.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

### Bezugszeichenliste

- 100: System
- 110: Server (Netzleitsystem)
- 120: Datenbank
- 130: elektronisches Gerät
- 140: Netz
- 140a: Netzteil (Transformator)
- 140b: fernsteuerbarer Schalter
- 140c: Betriebsmittel (Mittel- bzw. Hochspannungskabel)
- 150: Kommunikationsnetz (öffentlich)
- 160: Person (Monteur)
- 170: Person (Mitarbeiter Netzleitstelle)

## Patentansprüche

1. Verfahren, durchgeführt von einer oder mehreren Vorrichtungen (110) in einem Netz in Form eines Mittelspannungs- oder Hochspannungsnetzes, umfassend:
- Erfassen eines Schaltantrags, wobei der Schaltantrag ein freizuschaltendes Netzteil und/oder Betriebsmittel des Netzes zur Durchführung einer Maßnahme umfasst;
- Bestimmen einer Schaltreihenfolge für Bauteile (140a, 140b, 140c) eines von einer Netzleitstelle koordinierten Netzes (140) zumindest teilweise basierend auf dem erfassten Schaltantrag, um Netzteile und/oder Betriebsmittel des Netzes (140) gemäß dem erfassten Schaltantrag freizuschalten, wobei die Schaltreihenfolge einen oder mehrere Schaltschritte umfasst, die chronologisch durchzuführen sind und wobei die Schaltreihenfolge von einem Netzleitsystem (110) berechnet wird;
- Erfassen einer Schaltanfrage zum Schalten eines fernsteuerbaren Schalters (140b) des Netzes, wobei die Schaltanfrage von einem elektronischen Gerät (130) eines Monteurs übermittelt wird;
- Bestimmen einer Freigabeinformation zumindest teilweise basierend auf einem Status des Netzes (140) und der bestimmten Schaltreihenfolge, wobei die Freigabeinformation indikativ für ein Ermöglichen des Schaltens von dem fernsteuerbaren Schalter (140b) ist, wenn der Status des Netzes (140) die bestimmte Schaltreihenfolge abbildet, und wobei die Freigabeinformation andernfalls indikativ für ein Sperren des Schaltens von dem fernsteuerbaren Schalter (140b) ist, wobei die Freigabeinformation ferner basierend auf einem Parameter einer Schaltantragsinformation indikativ für einen von einem Nutzer (160, 170) gestellten Schaltantrag, einem Parameter eines Datums der Schaltanfrage, und/oder einem Parameter einer Person der Schaltanfrage (160) bestimmt wird, und wobei basierend auf der erfassten Schaltanfrage überprüft wird, ob die bestimmte Schaltreihenfolge ausgeführt wurden, und wobei der Status des Netzes (140) eine Information umfasst, ob vorherige Schaltschritte der bestimmten Schaltreihenfolge ausgeführt wurden, wobei die bestimmte Freigabeinformation eine Beschränkungsinformation in Form eines Sessiontokens umfasst, wobei die Beschränkungsinformation indikativ für eine zeitliche Beschränkung der Freigabeinformation ist, wobei die Freigabeinformation nach Ablauf der zeitlichen Beschränkung indikativ für ein Sperren des Schaltens von dem fernsteuerbaren Schalter ist, wobei eine maximale Anzahl an Schaltvorgängen des fernsteuerbaren Schalters, die in einem vordefinierten zeitlichen Rahmen durchgeführt werden können, als Schaltvorgangsinformation von der Freigabeinformation umfasst ist, wobei bei Überschreiten der maximalen Anzahl an Schaltvorgängen die Freigabeinformation indikativ ist für ein Sperren des Schaltens von dem fernsteuerbaren Schalter, wobei der Sessiontoken generiert wird, der für den Fall, dass gemäß der bestimmten Schaltreihenfolge ein mehrmaliges Schalten des fernsteuerbaren Schalters vorgesehen ist, diese Anzahl an Schaltvorgängen für den fernsteuerbaren Schalters zugelassen ist, wobei der vordefinierte zeitliche Rahmen identisch ist mit dem der zeitlichen Beschränkung gemäß der Freigabeinformation, wobei die Freigabeinformation auf das elektronische Gerät (130) des Monteur übermittelt wird; und
- Schalten des fernsteuerbaren Schalters (140b) basierend auf der bestimmten Freigabeinformation, wobei das Auslösen des Schaltens von dem fernsteuerbaren Schalter (140b) mittels einer entsprechenden Eingabe in das elektronische Gerät (130) erfolgt;
- wobei der fernsteuerbare Schalter (140b) Mittel zum Schalten des Schalters über eine Datenanbindung mittels des Netzleitsystems aufweist und eine Schaltbetätigungsinformation von dem elektronischen Gerät an das Netzleitsystem übermittelt wird.

2. Verfahren nach Anspruch 1, wobei das Schalten des fernsteuerbaren Schalters (140b) zumindest einen Schritt der Schaltreihenfolge darstellt.

3. Verfahren nach Anspruch 2, wobei der Status des Netzes (140) nach jedem durchgeführten Schaltschritt der einen oder mehreren Schaltschritte der bestimmten Schaltreihenfolge erfasst wird, und die Freigabeinformation indikativ für ein Ermöglichen des Schaltens ist, falls sämtliche der einen oder mehreren Schaltschritte in der chronologischen Reihenfolge vor dem Schritt des Schaltens von dem fernsteuerbaren Schalter (140b) durchgeführt wurden.

4. Verfahren nach Anspruch 2 oder Anspruch 3, wobei ein jeweiliger Schaltschritt der einen oder mehreren Schaltschritte der bestimmten Schaltreihenfolge eine Ortsinformation, eine Zeitinformation, eine Datumsinformation, eine Personeninformation, oder eine Kombination hiervon umfasst.

5. Verfahren nach einem der vorhergehenden Ansprüche, wobei die Freigabeinformation ferner basierend auf einem oder mehreren der folgenden Parameter i) bis iv) bestimmt wird:
i) Ort der Schaltanfrage; und
ii) Zeit der Schaltanfrage.

6. Verfahren nach Anspruch 5, wobei das Erfassen der Schaltanfrage eine Authentifizierung eines Nutzers (160) umfasst, und das Erfassen der Schaltanfrage erfolgt, wenn der Nutzer (160) erfolgreich authentifiziert ist.

7. Verfahren nach einem der vorhergehenden Ansprüche, wobei der Zustand des Netzes (140) zumindest den Schaltzustand von einem oder mehreren der folgenden Typen von Schaltern repräsentiert:
a) Manueller Schalter;
b) Manueller Schalter mit Datenanbindung für Überwachungsmöglichkeit; und
c) Fernsteuerbarer Schalter (140b).

8. Verfahren nach einem der vorhergehenden Ansprüche, wobei die bestimmte Freigabeinformation vor dem Schalten des fernsteuerbaren Schalters (140b) ausgegeben bzw. deren Ausgabe veranlasst wird, und das Schalten des fernsteuerbaren Schalters (140b) ferner bei Erfassen einer Schaltbetätigungsinformation indikativ für ein Auslösen des Schaltvorgangs für den fernsteuerbaren Schalter erfolgt.

9. Verfahren nach einem der vorhergehenden Ansprüche, wobei von der bestimmten Freigabeinformation eine Beschränkungsinformation umfasst ist, wobei die Beschränkungsinformation indikativ für eine zeitliche Beschränkung der Freigabeinformation ist, wobei die Freigabeinformation nach Ablauf der zeitlichen Beschränkung indikativ für ein Sperren des Schaltens von dem fernsteuerbaren Schalter (140b) ist.

10. Verfahren nach einem der vorhergehenden Ansprüche, wobei die Schaltanfrage von dem elektronischen Gerät (130) gesendet wird.

11. Verfahren nach einem der vorhergehenden Ansprüche, wobei zumindest eine der einen oder mehreren Vorrichtungen ein Server konfiguriert zum Ausführen eines Netzleitsystems (110) ist.

12. Verfahren nach Anspruch 11, wobei ausschließlich für den Zeitpunkt des Schaltens des fernsteuerbaren Schalters (140b) eine Schnittstelle des Netzleitsystems (110) für einen Zugriff durch das elektronische Gerät (130) freigeschaltet ist.

13. Verfahren nach einem der vorhergehenden Ansprüche, wobei eine maximale Anzahl an Schaltvorgängen des fernsteuerbaren Schalters (140b), die in einem vordefinierten zeitlichen Rahmen durchgeführt werden können, als Schaltvorgangsinformation von der Freigabeinformation umfasst ist, und wobei bei Überschreiten der maximalen Anzahl an Schaltvorgängen die Freigabeinformation indikativ für ein Sperren des Schaltens von dem fernsteuerbaren Schalter (140b) ist.

14. Vorrichtung umfassend Mittel zur Durchführung und/oder Ausführung des Verfahrens nach einem der Ansprüche 1 bis 13.

15. System, umfassend:
zumindest eine Vorrichtung (110) zur Ausführung eines Verfahrens nach einem der Ansprüche 1 bis 13, und
zumindest ein elektronisches Gerät (130), wobei das elektronische Gerät dazu eingerichtet und/oder ausgebildet ist, eine Schaltanfrage an die zumindest eine Vorrichtung (110) zu senden, eine Freigabeinformation von der zumindest einen Vorrichtung zu empfangen, und/oder eine Schaltbetätigungsinformation an die zumindest eine Vorrichtung (110) zu senden.

## Claims

1. A method performed by one or more devices (110) in a network in the form of a medium-voltage network or high-voltage network, comprising:
- detecting a switching request, wherein the switching request comprises a power supply to be disconnected and/or an equipment of a network to be disconnected for performing an action;
- determining a switching sequence for components (140a, 140b, 140c) of a network (140) coordinated by a network control center, at least partially based on the detected switching request, in order to disconnect the power supply and/or equipment of the network (140) in accordance with the detected switching request, wherein the switching sequence comprises one or more switching steps to be performed chronologically and wherein the switching sequence is calculated by a grid control system (110);
- detecting a switching request to switch a remotely controllable switch (140b) of the network, wherein the switching request is transmitted by an electronic device (130) of a technician;
- determining a piece of a release information at least partially based on a status of the network (140) and the determined switching sequence, wherein the piece of the release information is indicative of enabling a switching by the remotely controllable switch (140b) if the status of the network (140) matches the determined switching sequence, and wherein the piece of the release information is otherwise indicative of disabling switching by the remotely controllable switch (140b), wherein the piece of the release information is further determined based on a parameter of a piece of a switching request information indicative of a switching request made by a user (160, 170), a parameter of a date of the switching request, and/or a parameter of a person of the switching request (160), and wherein, based on the detected switching request, it is checked whether the determined switching sequence has been executed, and wherein the status of the network (140) includes a piece of information on whether previous switching steps of the determined switching sequence have been executed, wherein the determined piece of release information includes a piece of restriction information in the form of a session token, wherein the piece of restriction information is indicative of a time limit of the piece of release information, wherein the piece of release information is indicative of a blocking of the switching by the remotely controllable switch upon expiration of the time limit, wherein a maximum number of switching operations of the remotely controllable switch that can be performed within a predefined time frame is included in the piece of release information as a piece of switching operation information, wherein, if the maximum number of switching operations is exceeded, the piece of release information indicates a blocking of switching by the remotely controllable switch, wherein the session token is generated, which, in the event that repeated switching of the remotely controllable switch is provided for according to the determined switching sequence, this number of switching operations is permitted for the remotely controllable switch, wherein the predefined time frame is identical to that of the time restriction according to the piece of release information, wherein the piece of release information is transmitted to the electronic device (130) of the technician; and
- switching the remotely controllable switch (140b) based on the determined piece of release information, wherein the triggering of the switching of the remotely controllable switch (140b) is effected by means of a corresponding input into the electronic device (130);
- wherein the remotely controllable switch (140b) comprises means for switching the switch via a data connection using the network control system, and a piece of a switching activation information is transmitted from the electronic device to the network control system.

2. The method according to claim 1, wherein the actuation of the remotely controllable switch (140b) constitutes at least one step of the switching sequence.

3. The method according to claim 2, wherein the status of the network (140) is detected after each switching step performed of the one or more switching steps of the determined switching sequence, and the piece of release information indicates that switching is permitted if all of the one or more switching steps have been performed in chronological order prior to the step of switching by the remotely controllable switch (140b).

4. The method according to claim 2 or claim 3, wherein a respective switching step of the one or more switching steps of the determined switching sequence comprises a piece of location information, a piece of time information, a piece of date information, a piece of personal information, or a combination thereof.

5. The method according to any one of the preceding claims, wherein the piece of release information is further determined based on one or more of the following parameters i) through iv):
i) location of the switching request; and
ii) time of the switching request.

6. The method according to claim 5, wherein detecting the switching request comprises authenticating a user (160), and detecting the switching request occurs if the user (160) is successfully authenticated.

7. The method according to any one of the preceding claims, wherein the state of the network (140) represents at least the switching state of one or more of the following types of switches:
a) manual switch;
b) manual switch with data connection for monitoring capability; and
c) remote-controllable switch (140b).

8. The method according to one of the preceding claims, wherein the determined piece of release information is output or its output is caused prior to switching the remotely controllable switch (140b), and the switching of the remotely controllable switch (140b) further occurs upon detection of a piece of a switching actuation information indicative of triggering the switching operation for the remotely controllable switch.

9. The method according to one of the preceding claims, wherein the determined piece of release information comprises a piece of restriction information, wherein the piece of restriction information is indicative of a time limit of the piece of release information, wherein, after the time limit has expired, the piece of release information is indicative of a blocking a switching by the remotely controllable switch (140b).

10. The method according to one of the preceding claims, wherein the switching request is sent by the electronic device (130).

11. The method according to any one of the preceding claims, wherein at least one of the one or more devices is a server configured to execute a network management system (110).

12. The method according to claim 11, wherein an interface of the network control system (110) is released for an access by the electronic device (130) exclusively at the time the remotely controllable switch (140b) is switched.

13. The method according to one of the preceding claims, wherein a maximum number of switching operations of the remotely controllable switch (140b) that can be performed within a predefined time frame is included in the piece of release information as a piece of switching operation information, and wherein, if the maximum number of switching operations is exceeded, the piece of release information indicates that switching by the remotely controllable switch (140b) is inhibited.

14. A device comprising means for carrying out and/or executing the method according to any one of claims 1 to 13.

15. A system comprising:
at least one device (110) for performing a method according to any one of claims 1 to 13, and
at least one electronic device (130), wherein the electronic device is configured and/or designed to send a switching request to the at least one device (110), to receive a release signal from the at least one device, and/or to send a switching activation signal to the at least one device (110).

## Revendications

1. Méthode, exécutée par un ou plusieurs dispositifs (110) dans un réseau sous forme d'un réseau de moyenne tension ou de haute tension, comprenant :
- détecter un ordre de commutation, où l'ordre de commutation comprend un bloc d'alimentation et/ou un équipement du réseau à déconnecter pour la réalisation d'une mesure ;
- déterminer une séquence de commutation pour des composants (140a, 140b, 140c) d'un réseau (140) coordonné par un centre de contrôle du réseau, basée au moins en partie sur l'ordre de commutation détecté, afin de déconnecter des sections du réseau et/ou des équipements du réseau (140) conformément à l'ordre de commutation détecté, où la séquence de commutation comprend une ou plusieurs étapes de commutation à effectuer chronologiquement, et où la séquence de commutation est calculée par un système de gestion du réseau (110) ;
- détecter une demande de commutation pour commuter un commutateur télécommandable (140b) du réseau, où la demande de commutation est transmise par un dispositif électronique (130) d'un technicien ;
- déterminer une information d'autorisation basée au moins en partie sur un statut du réseau (140) et la séquence de commutation déterminée, où l'information d'autorisation est indicative d'une activation de la commutation du commutateur télécommandable (140b) si le statut du réseau (140) reflète la séquence de commutation déterminée, et où l'information d'autorisation est sinon indicative d'un blocage de la commutation du commutateur télécommandable (140b), où l'information d'autorisation est en outre déterminée basée sur un paramètre d'une information d'ordre de commutation indicative d'un ordre de commutation émis par un utilisateur (160, 170), un paramètre d'une date de la demande de commutation, et/ou un paramètre d'une personne de la demande de commutation (160), et où il est vérifié basé sur la demande de commutation détectée si la séquence de commutation déterminée a été exécutée, et où le statut du réseau (140) comprend une information indiquant si les étapes de commutation précédentes de la séquence de commutation déterminée ont été exécutées, où l'information d'autorisation déterminée comprend une information de restriction sous forme d'un jeton de session, où l'information de restriction est indicative d'une restriction temporelle de l'information d'autorisation, où l'information d'autorisation est indicative d'un blocage de la commutation du commutateur télécommandable après expiration de la restriction temporelle, où un nombre maximal d'opérations de commutation du commutateur télécommandable pouvant être effectuées dans un cadre temporel prédéfini est compris comme information d'opération de commutation par l'information d'autorisation, où en cas de dépassement du nombre maximal d'opérations de commutation l'information d'autorisation est indicative d'un blocage de la commutation du commutateur télécommandable, où le jeton de session est généré, qui, dans le cas où conformément à la séquence de commutation déterminée une commutation multiple du commutateur télécommandable est prévue, est autorisé pour ce nombre d'opérations de commutation pour le commutateur télécommandable, où le cadre temporel prédéfini est identique à celui de la restriction temporelle conformément à l'information d'autorisation, où l'information d'autorisation est transmise au dispositif électronique (130) du technicien ; et
- commuter le commutateur télécommandable (140b) basé sur l'information d'autorisation déterminée, où le déclenchement de la commutation du commutateur télécommandable (140b) est effectué par une entrée correspondante dans le dispositif électronique (130) ;
- où le commutateur télécommandable (140b) a des moyens pour commuter le commutateur par une connexion de données par le système de gestion du réseau, et une information d'actionnement du commutateur est transmise du dispositif électronique au système de gestion du réseau.

2. Méthode selon la revendication 1, où la commutation du commutateur télécommandable (140b) représente au moins une étape de la séquence de commutation.

3. Méthode selon la revendication 2, où le statut du réseau (140) est détecté après chaque étape de commutation effectuée parmi l'une ou plusieurs étapes de commutation de la séquence de commutation déterminée, et l'information d'autorisation est indicative d'une activation de la commutation si toutes les une ou plusieurs étapes de commutation ont été effectuées dans l'ordre chronologique avant l'étape de commutation du commutateur télécommandable (140b).

4. Méthode selon la revendication 2 ou la revendication 3, où une étape de commutation respective des une ou plusieurs étapes de commutation de la séquence de commutation déterminée comprend une information de localisation, une information temporelle, une information de date, une information de personne, ou une combinaison de celles-ci.

5. Méthode selon l'une des revendications précédentes, où l'information d'autorisation est en outre déterminée basée sur un ou plusieurs des paramètres suivants i) à iv) :
i) Lieu de la demande de commutation ; et
ii) Temps de la demande de commutation.

6. Méthode selon la revendication 5, où la détection de la demande de commutation comprend une authentification d'un utilisateur (160), et la détection de la demande de commutation a lieu lorsque l'utilisateur (160) a été authentifié avec succès.

7. Méthode selon l'une des revendications précédentes, où l'état du réseau (140) représente au moins l'état de commutation d'un ou plusieurs des types de commutateurs suivants :
a) Commutateur manuel ;
b) Commutateur manuel avec connexion de données pour possibilité de surveillance ; et
c) Commutateur télécommandable (140b).

8. Méthode selon l'une des revendications précédentes, où l'information d'autorisation déterminée est émise ou son émission est déclenchée avant la commutation du commutateur télécommandable (140b), et la commutation du commutateur télécommandable (140b) a en outre lieu lors de la détection d'une information d'actionnement du commutateur indicative d'un déclenchement de l'opération de commutation pour le commutateur télécommandable.

9. Méthode selon l'une des revendications précédentes, où une information de restriction est comprise par l'information d'autorisation déterminée, où l'information de restriction est indicative d'une restriction temporelle de l'information d'autorisation, où l'information d'autorisation est indicative d'un blocage de la commutation du commutateur télécommandable (140b) après expiration de la restriction temporelle.

10. Méthode selon l'une des revendications précédentes, où la demande de commutation est envoyée par le dispositif électronique (130).

11. Méthode selon l'une des revendications précédentes, où au moins un des un ou plusieurs dispositifs est un serveur configuré pour exécuter un système de gestion du réseau (110).

12. Méthode selon la revendication 11, où une interface du système de gestion du réseau (110) est déverrouillée exclusivement pour le moment de la commutation du commutateur télécommandable (140b) pour un accès par le dispositif électronique (130).

13. Méthode selon l'une des revendications précédentes, où un nombre maximal d'opérations de commutation du commutateur télécommandable (140b) pouvant être effectuées dans un cadre temporel prédéfini est compris comme information d'opération de commutation par l'information d'autorisation, et où en cas de dépassement du nombre maximal d'opérations de commutation l'information d'autorisation est indicative d'un blocage de la commutation du commutateur télécommandable (140b).

14. Dispositif comprenant des moyens pour effectuer et/ou exécuter la méthode selon l'une des revendications 1 à 13.

15. Système, comprenant :
au moins un dispositif (110) pour exécuter une méthode selon l'une des revendications 1 à 13, et
au moins un dispositif électronique (130), où le dispositif électronique est configuré et/ou formé pour envoyer une demande de commutation à l'au moins un dispositif (110), recevoir une information d'autorisation de l'au moins un dispositif, et/ou envoyer une information d'actionnement du commutateur à l'au moins un dispositif (110).
